# EUROPEAN PATENT APPLICATION

(11) **EP 4 303 787 A1**
(43) Date of publication of application: **10.01.2024**
(21) Application number: 22182911.2
(22) Date of filing: 04.07.2022
(51) Int. Cl.: G06Q 10/06, G06Q 50/04, G06Q 50/08

(54) **SYSTEM AND METHOD FOR HANDLING AN OBJECTIVE ASSOCIATED WITH PERFORMANCE AT A PRODUCTION SITE**

(71) Applicant: VOLVO TRUCK CORPORATION, 405 08 Göteborg (SE)
(72) Inventor: SOHLBERG, Per, 436 52 Hovås (SE); SJÖSTRÖM, Lars-Ola, 722 23 Västerås (SE)
(74) Representative: Valea AB

(57) **Abstract**

The present invention relates to a method performed by a production site manager system (110) for handling an objective associated with performance at a production site (100). The system obtains a request to handle the objective on behalf of a human production site manager (105). When the request has been obtained, the system predicts the objective for the performance at the production site. The system obtains real time information of performance at the production site. The system compares the real time information with the objective. When a result of the comparing indicates a deviation, the system provides, at a first time instance, deviation information indicating the deviation. When the result of the comparing does not indicate the deviation, the system provides, at a second time instance, confirmation information indicating that a conformation of that the production site meets the objective.

## Description

### TECHNICAL FIELD

The present disclosure relates generally to a production site manager system and a method performed by the production site manager system. More particularly, the present disclosure relates to handling an objective associated with performance at a production site.

The invention can be applied in heavy-duty vehicles, such as trucks, buses and construction equipment. Although the invention may be described with respect to a truck, the invention is not restricted to this particular vehicle, but may also be used in other vehicles such as buses, trailers, wheel loaders, articulated haulers, excavators, cranes, backhoe loaders, passenger cars, marine vessels etc. It may also be applied in various industrial construction machines or working machines. It is applicable in fully electrically operated vehicles as well as in hybrid vehicles, comprising also a combustion engine, and in vehicles only operated by a combustion engine, i.e. not having any electrical engine. The term vehicle will be used herein when referring to any of the above types of vehicles.

### BACKGROUND

There are several types of vehicles involved in the daily work at a production site. For example, trucks transports material to and/or from the production site, excavators load the trucks, cranes load the trucks etc. Example of a production site may be for example a construction site, a mining site, a forest site, a port, a logistics center, an airport etc.

The work performed at the production site is complex and involves a large amount to of tasks of different types to be performed. The work performed at a production site is time critical such that it is important that the tasks are performed on time in order to for example not create any delay at the production site. A production site has typically an objective for each day that describes a goal or requirement for the work to be done at a particular day. Planning and monitoring of the production site is therefore important in order to meet the objective. However, the personnel working at the production site are extremely busy, mostly being at the production site to firefight obstacles of various types.

This means that the personnel are seldom at their office doing planning, monitoring and managing tasks in order to meet the objective.

There are different software applications (app) that the personnel can use to perform planning, managing and monitoring of the production site. However, filling in and updating such app is typically not prioritized by the personnel and they often forget to use the app. Current apps also provide the personnel with unnecessary information and requests their attention or an action, even though it may not be necessary or of high priority. This may result in that, even though various tools for helping the personnel exist, it is still a risk for objectives at the production site not being met, vehicles being dispatched to the wrong destination, and which is discovered too late etc.

Therefore, there is a need to at least mitigate or solve this issue.

### SUMMARY

An object is to obviate at least one of the above disadvantages and to improve handling of an objective associated with performance at a production site.

According to a first aspect, the object is achieved by a method according to claim 1. The method is performed by a production site manager system for handling an objective associated with performance at a production site. The production site manager system obtains a request to handle the objective on behalf of a human production site manager. When the request has been obtained, the production site manager system predicts the objective for the performance at the production site. The objective is predicted based on historic information about objective, i.e. the objective may be referred to as a predicted objective. The production site manager system obtains real time information of performance at the production site. The production site manager system compares the real time information with the objective. When a result of the comparing indicates a deviation, the production site manager system provides, at a first time instance, deviation information indicating the deviation. When the result of the comparing does not indicate the deviation, the production site manager system provides, at a second time instance, confirmation information indicating that a conformation of that the production site meets the objective.

By the provision of a method performed by the production site manager system, the advantage of improving handling of an objective associated with performance at a production site is provided. Since the deviation information is only provided when the result of the comparing indicates a deviation, the user of the production site manager system and/or the receiver of the deviation information is not disturbed with any information except when there is a deviation. The deviation information is provided at a first time instance which may be for example immediately when the result of the comparing indicates the deviation, without any delay or with a delay that is below a threshold. The performance at the production site may comprise vehicle performance. Thus, the user of the production site manager system and/or the receiver of the deviation information can focus on other tasks at the production site and can assume that the objective is on track and will be met if he/she is not provided with any deviation information. At the second time instance, e.g. at the end of the day, confirmation information is provided which indicates that the production site had met the deadly objective.

Optionally, when the result of the comparing indicates the deviation, the production site manager system may provide action information indicating one or more actions that may be taken to meet or to increase the probability of meeting the objective. With this the handling of the objective associated with performance at a production site is improved.

Optionally, the one or more actions may comprise:
- to increase a number of vehicles associated with the production site; and
- to change the predicted objective.
Other actions may be to reorganize the tasks to be performed by the vehicles, to change the travel route of the vehicles etc. With this, it is possible to meet the objective of the productions site. If it is deemed that it may not be possible to meet the objective, then the objective may be changed.

Optionally, the performance may be associated with one or more of:
- an amount of loaded and/or unloaded goods at the production site; and/or
- a number of loads that has been loaded and/or unloaded at the production site.
By obtaining real time information of the amount of loaded and/or unloaded goods and/or the number of loads, the comparing with the objective may be based on information that are directly involved in and influencing the objective. Thus, the result of the comparing is of high quality, it may be correct and trusted.

Optionally, the objective may be predicted based on at least one of: weather data and traffic information. For example, if weather data indicates a temperature of below 0°C, then there may be a risk for icy roads which again may influence the time it takes for the vehicles to drive at the production site and to/from the production site. Traffic information may for example indicate that there is a traffic jam on the road between the onloading and offloading site that are used by the vehicles, and this may influence the changes of meeting the objective. Thus, using weather data and traffic information to predict the objective may provide an objective that is updated and correct.

Optionally, the first time instance may be immediately after the result of the comparing indicates the deviation and the second time instance may be after the first time instance. The result of the comparing indicating the deviation may therefore be provided, for example to the user of the production site manager system, when the deviation is detected or with a short delay as possible after the deviation has been detected. With this, it is possible to take counter actions to overcome the deviation and such that the objective is met. Providing the confirmation information at the second time instance which may be after the first time instance may be such that the confirmation information is provided at the end of the work day, for example when the user of the production site manager system is not typically occupied with other tasks, when he is at the office etc.

Optionally, the first time instance may be during a work shift and the second time instance may be at an end of the work shift. When the first time instance may be during a work shift, it may be possible to, during the work shift, take necessary actions to reduce or mitigate the cause of the deviation and still being able to meet the objective. When the second time instance may be at the end of the work shift, the user of the production site manager system may be provided with the confirmation information at a time when he/she is not occupied with other tasks and have time to review and handle the confirmation information. Thus, the user of the production site manager system is not unnecessarily disturbed by the production site manager system.

According to a second aspect, the object is achieved by a production site manager system according to claim 8. The production site manager system is arranged for handling an objective associated with performance at a production site. The production site manager system is arranged to perform a method according to the first aspect. The production site manager system may be a computer and/or implemented on a computer. The production site manager system may comprise hardware and/or software. Advantages and effects of the production site manager system of the second aspect are largely analogous to the advantages and effects of the method of the first aspect. Further, all embodiments of the first aspect are applicable to and combinable with all embodiments of the production site manager system, and vice versa.

According to a third aspect, the object is achieved by a computer program according to claim 9. The computer program comprises program code means for performing the method of the first aspect when the computer program is run on a computer.

According to a fourth aspect, the object is achieved by computer readable medium according to claim 10. The computer readable medium carries a computer program comprising program code means for performing the method of the first aspect when the computer program is run on a computer.

The present disclosure is not limited to the features and advantages mentioned above. A perso skilled in the art will recognize additional features and advantages upon reading the following detailed description.

### BRIEF DESCRIPTION OF THE DRAWINGS

The present disclosure will now be described in more detail by way of example only in the following detailed description by reference to the appended drawings in which:
- Fig. 1: is a schematic drawing illustrating a production site.
- Fig. 2: is a flow chart illustrating a method.
- Fig. 3: is a schematic drawing illustrating information provided by a a production site manager system.
- Fig. 4: is a schematic drawing illustrating information provided by a a production site manager system.
- Fig. 5: is a schematic drawing illustrating information provided by a a production site manager system.
- Fig. 6a: is a schematic drawing illustrating a production site manager system.
- Fig. 6b: is a schematic drawing illustrating a production site manager system.

The drawings are not necessarily to scale, and the dimensions of certain features may have been exaggerated for the sake of clarity. Emphasis is instead placed upon illustrating the principle.

### DETAILED DESCRIPTION

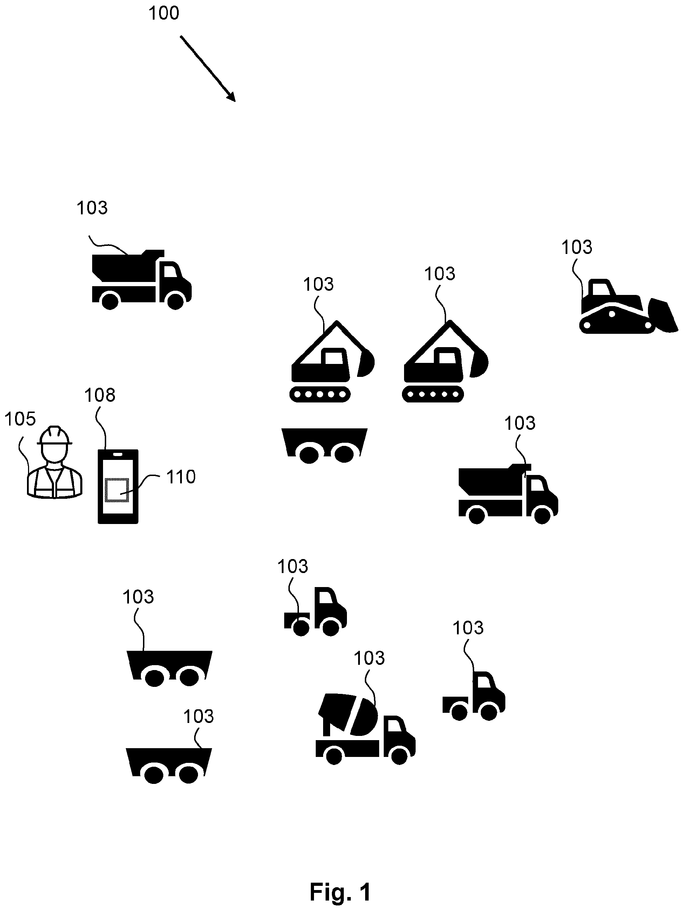

Fig. 1 illustrates an example of a production site 100. Example of a production site may be for example a construction site, a mining site, a forest site, a port, a logistics center, an airport etc. The example illustrated in fig. 1 is of a construction site.

One or more vehicles 103 are involved in or associated with the work at the production site 100. In case there are multiple vehicles 103, then these vehicles 103 may be of the same or different types. Examples of different vehicle types are towing trucks with or without a connected trailer, excavators, cranes, dumper trucks etc. Some of these examples are shown in fig. 1. The vehicles 103 may be referred to as an asset comprised in and/or associated with the production site 100.

A production site manager 105 may be responsible for managing the production site 100. The production site manager 105 may be any suitable person such as for example a foreman. The production site manager 105 may perform a large number of tasks and tasks of different types when managing the production site. Due to the size and complexity of the responsibilities of the production site manager 105, it is important that he is not disturbed by unnecessary tasks, unnecessary information, unnecessary interruptions etc. when performing his work.

The production site manger 105 may have access to and use a User Equipment (UE) 108 when performing his work. Only one UE 108 is exemplified in fig. 1, but the production site manager 105 may have access to a plurality of UEs 108. The UE 108 may also be referred to simply as a device. The UE 108 may be a wireless communication device which may also be known as e.g., a wireless device, a mobile terminal, wireless terminal and/or mobile station, a mobile telephone, cellular telephone, or laptop with wireless capability, just to mention some examples. The UE 108 may be stationary, portable, pocket storable, hand held, computer comprised, vehicle mounted etc. the UE 108 may be arranged to communicate, via any suitable communication network, with another entity, such as another UE, a server, a laptop, a Personal Digital Assistant (PDA), or a tablet, Machine-to-Machine (M2M) device, Internet of Things (loT) device equipped with a wireless interface, such as a printer or a file storage device, modem, one or more vehicle 103 at the production site 100, a UE 108 of the users and/or operators of the vehicles 103 or any other unit capable of communicating over a communication link in the production site.

To help the production site manager 105 in his daily work, he has access to and uses a production site manager system 110. The production site manager system 110 may be a digital production site manager system 110. The production site manager system 110 may be a computer or it may be computer implemented. The production site manger system 110 may be the UE 108 or it may be implemented in the UE 108. Thus, the human production site manager 105 use the production site manger system 110 in his work at the production site 100.

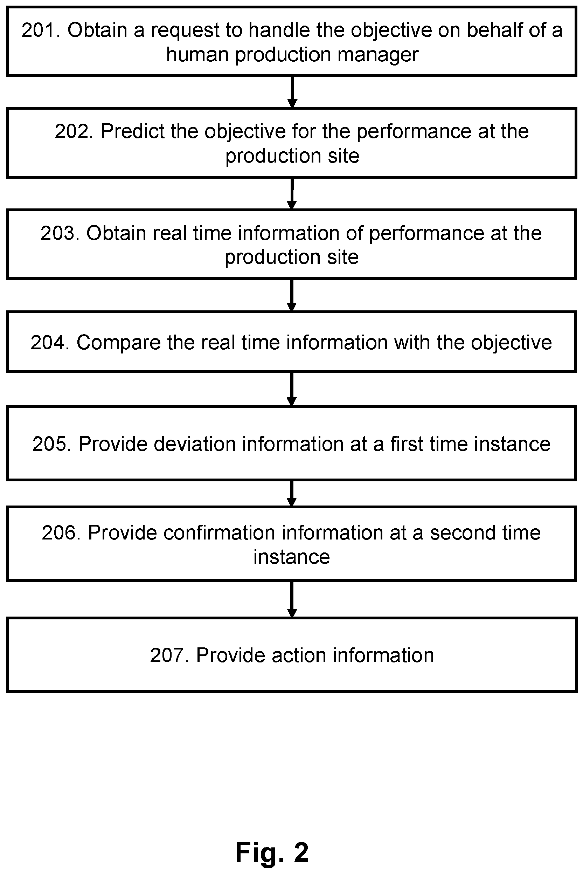

Fig. 2 is a flow chart illustrating a method performed by the production site manager system 110 for handling an objective associated with performance at a production site. The performance at the production site may comprise vehicle performance. The method comprises at least one of the following steps, which steps may be performed in any suitable order than described below:

### Step 201

The production site manager system 110 obtains a request to handle the objective on behalf of a human production site manager 105. The request may be in the form of user input inputted by for example the production site manager 105. The request may be obtained by a user inputting the request into an input device such as the UE 108. The input device may be a touch screen, a keyboard, a button, a microphone or any other suitable input. The user input may be spoken input, textual input, visual input, data input etc. The request may be obtained from another system, e.g. a central production site system. When the production site manager system 110 is requested to handle the objective on behalf of a human production manger 105

### Step 202

When the request has been obtained, the production site manager system 110 predicts the objective for the performance at the production site. The precited objective may be referred to as an expected forecast of the objective. The objective is predicted based on historic information about the objective. The objective may be a predicted objective. Thus, the human production manager 105 is not necessarily involved in predicting the objective. With this the human production site manager 105 does not need to spend time in the setting the objective and may instead perform other tasks at the production site 100.

Predicting the objective may be referred to as forecasting the objective and the objective may be a forecasted objective. Predicting the objective may be referred to as determining an expected forecast of the objective and the objective may be an expected forecasted objective. Predicting the objective may be referred to as determining an expected objective and the objective may be an expected objective.

The objective may be valid for a work shift objective, a daily objective, a weekly objective, a monthly objective or an objective for any certain time period.

The objective may be a goal to be achieved at the production site. The objective may be associated with a minimum amount of material transported to and/or from the production site 100 during a time period, e.g. a day, it may be associated with a minimum number of vehicles 103 performing work at the production site 100 during a time period, it may be that the amount of exhaust gas emitted by all vehicles 103 performing work at the production site 100 during a time period do not exceed a threshold, i.e. they operate in an environmental friendly fashion etc.

Considering that the historic information for the last 10 days of objectives for the production site indicates that an average objective that has been met is 2000 tonnes material loaded and transported from the production site 100 to a storage location, e.g. a storage location at the production site 100 or at some other location. Then the production site manager system 110 may predict the objective to be 2000 tonnes, i.e. the same as the average as indicated by the historic information.

The predicted objective may be for a particular day or for a time period.

The predicted objective may be fixed for the particular day or time period, or it may be updated if for example it is determined that it is unlikely that the objective will not be met.

The production site manager system 110 may have access to historic information about the objective from a memory storage, e.g. a local memory in the production site manager system 110, a remote memory, a cloud memory, a central memory storage.

The objective may be predicted based on at least one of: weather data and traffic information. For example, if weather data indicates a temperature of below 0°C, then there may be a risk for icy roads which again may influence the time it takes for the vehicles to drive at the production site and to/from the production site. Traffic information may for example indicate that there is a traffic jam on the road between the onloading and offloading site that are used by the vehicles, and this may influence the changes of meeting the objective. Thus, using weather data and traffic information to predict the objective may provide an objective that is updated and correct.

The predicted objective may be provided to an output unit, for example comprised in the UE 108, such that is accessible by the human production manager 105. The output unit may be for example a display, a speaker, a tactile output unit etc.

### Step 203

The production site manager system 110 obtains real time information of performance at the production site. The real time information may be obtained from each vehicle 103 associated with or comprised in the production site 100, or from a device associated with each vehicle 103, for example the vehicle operator's UE 108. The real time information may be obtained from a central unit, e.g. located at a production site office. The real time information may be obtained from one or more sensors located at the production site 100. An example of a sensor may be a camera arranged to count the number of loads that has been loaded and/or unloaded at the production site. Another example of a sensor may be a scale arranged to weigh the amount of loaded and/or loaded goods etc.

The performance may be associated with one or more of:
- an amount of loaded and/or unloaded goods at the production site; and/or
- a number of loads that has been loaded and/or unloaded at the production site; and/or
- an amount of exhaust gas emitted by the vehicles 103 at the production site.

The obtaining of the real time information may comprise that the production site manager system 110 monitors the production site 100 using any suitable means for monitoring.

The production site manager system 110 may use Artificial intelligence (Al), advanced analytics and self-learning capabilities to keeping an eye on the production site and detect when something deviates from the predicted objective and additionally inform about and confirms the performance during normal operations.

### Step 204

The production site manager system 110 compares the real time information with the objective.

### Step 205

When a result of the comparing indicates a deviation, the production site manager system 110 provides, at a first time instance, deviation information indicating the deviation. A deviation may indicate that the objective will not be met or that it will be met to a degree below a threshold.

The deviation information may be provided to an output unit, for example comprised in or associated with the UE 108. The output unit may be for example a display, a speaker, a tactile output device etc. The deviation information may be provided to the human production manger 105.

The first time instance may be immediately after the result of the comparing indicates the deviation. This way, there may be no delay or as little delay as possible between detecting the deviation and informing the human production manager 105 about the deviation.

The first time instance may be during a work shift.

The deviation information may be provided only when the deviation has been detected. The human production manager 105 will then be disturbed by the production site manager system 110 during the work shift only when the production site 100 is not performing well, i.e. when it is predicted that the objective will not be met.

The deviation information may be in the form of an alarm, a chime, a notification, push notification, text message etc. with the purpose of getting the attention of the human production site manager 105. The human production site manger 105 may then obtain further information about the deviation information by for example opening an app in the UE 108 or by searching for information.

The deviation information may warn the production site manager system 110 telling him that something is wrong. E.g., "3 trucks dispatched to closed landfill Alekrossen". When such information is provided at the first time instance, the risk of sending transport trucks 103 to the wrong destination may be discovered in time and may be avoided.

### Step 206

When the result of the comparing does not indicate the deviation, the production site manager system 110 provides, at a second time instance, confirmation information indicating that a conformation of that the production site meets the objective.

The confirmation information may be provided to an output unit, for example comprised in or associated with the UE 108. The output unit may be for example a display, a speaker, a tactile output device etc. The confirmation information may be provided to the human production manger 105.

The second time instance may be after the first time instance. This way, the confirmation information is provided at a time where it is deemed that the human production manager 105 is not occupied with other tasks at the production site. The second time instance may be determined by the production site manager system 110 or it may be set by the human production site manager 105

The second time instance may be at an end of the work shift.

This means that the production site manager system 110 will not disturb the human production manager 105 during the work shift when the work at the production site 100 is performing well, i.e. when it is predicted that the objective will be met.

At the end of a time period, e.g. and the end of the day or work shift, the production site manager system 110 compiles and send a notification of the performance achieved.

### Step 207

When the result of the comparing indicates the deviation, the production site manager system 110 may provide action information indicating one or more actions that may be taken to meet the objective.

The one or more actions may comprise:
- to increase a number of vehicles associated with the production site; and
- to change the objective, i.e. the objective that was predicted in step 202.

The action may be performed by the human production site manager 105 and/or by the production site manager system 110.

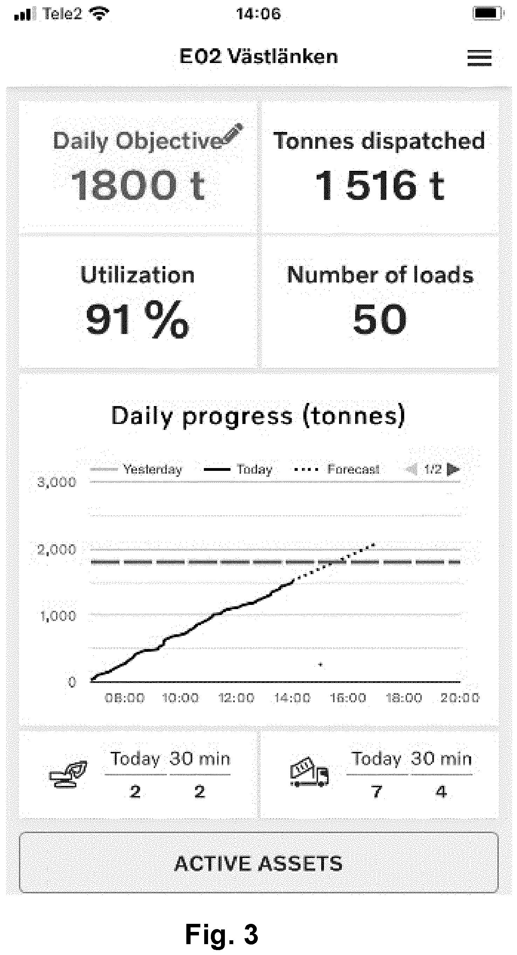

Fig. 3 is a schematic drawing illustrating information provided by a production site manager system 110, e.g. a screenshot illustrating the information provided by the production site manager system 110. The information may be provided on the UE 108, e.g. displayed on a display comprised in the UE 108. As seen in fig. 3, the production site manager system 110 may provide information about an objective, the number of tonnes dispatched, utilization, number of loads, daily progress measured in tonnes, active assets etc. The objective may be valid for a work shift objective, a daily objective, a weekly objective, a monthly objective or an objective for any certain time period. The objective is exemplified to be 1800 tonnes, the tonnes dispatched at the time of when the information is provided is 1516 tonnes. The utilization of the production site is 91% and the number of loads is exemplified to be 50. The graph illustrated in fig. 3represents an example of the daily progress at the production site and measured in tonnes. The x-axis represents the time, and the y-axis represents tonnes. The horizontal dashed line represents the objective. The solid line represents the daily progress and the dotted lines, which continues from the solid line, represent a forecasted progress. As seen from the example in fig. 3, the objective will be met at 16:00, i.e. the crossing point between the forecast and the objective. Two different types of active assets or vehicles 103 are shown in the bottom part of fig. 3. It is exemplified that 2 excavators and that 7 trucks have been active today in total. 20 excavators and 4 trucks have been active for the last 30 minutes.

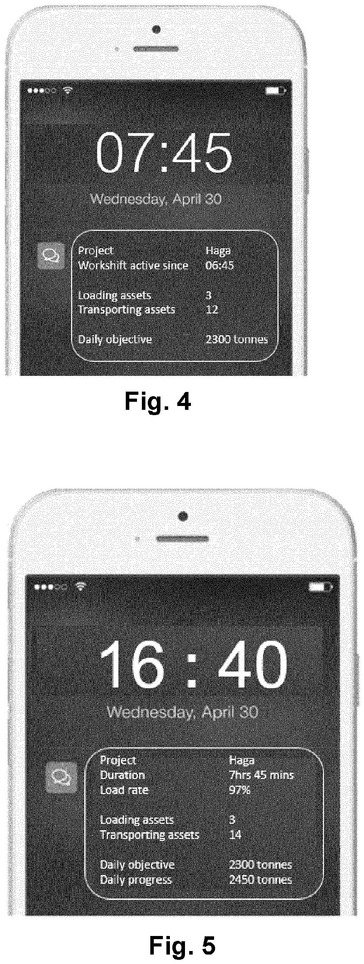

**Fig. 4** illustrates an example of the invention provided by the production site manager system 110. In fig. 4, the production site manager system 110 is exemplified to be or to be implemented in UE 108 being a mobile phone. As seen in fig. 4, the production site manager system 110 may provide information about the current time, and date. The information about the current time and may be provided by the production site manager system 110 or it may be provided by some other unit or system, for example comprised in the same UE 108 as the production site manager system 110. The current time is exemplified to be 07:45 and the date is exemplified to be Wednesday, April 30. Below the time and date, information is provided indicating the production site, e.g. the name of the production site or project, information indicating when the work shift has been active since, i.e. a starting time of the work shift, a number of loading assets, a number of transporting assets and the objective. The production site, also referred to as project is named Haga. The workshop has been active since 06:45. There are 3 loading assets and 12 transporting assets associated with the production site 100. The objective is 2300 tonnes.

**Fig. 5** illustrates an example of the invention provided by the production site manager system 110. In fig. 5, similar to fig. 4, the production site manager system 110 is exemplified to be or to be implemented in UE 108 being a mobile phone. As seen in fig. 5, the production site manager system 110 may provide information about the current time, and date. The information about the current time and may be provided by the production site manager system 110 or it may be provided by some other unit or system, for example comprised in the same UE 108 as the production site manager system 110. Below the time and date, information is provided indicating the production site, e.g. the name of the production site or project, information indicating the duration of the current work shift, a load rate, a number of loading assets, a number of transporting assets, an objective and a daily progress. The production site 100, also referred to as the project, is named Haga. The duration of the work shift on Wednesday, April 30 is currently 7hrs and 45 minutes. The load rate is 97%. There are 3 loading assets and 14 transporting assets currently associated with the production site 100. The objective is 2300 tonnes and the daily progress, i.e. the current amount of loaded tonnes at 16:40 on Wednesday, April 30, is 2450 tonnes.

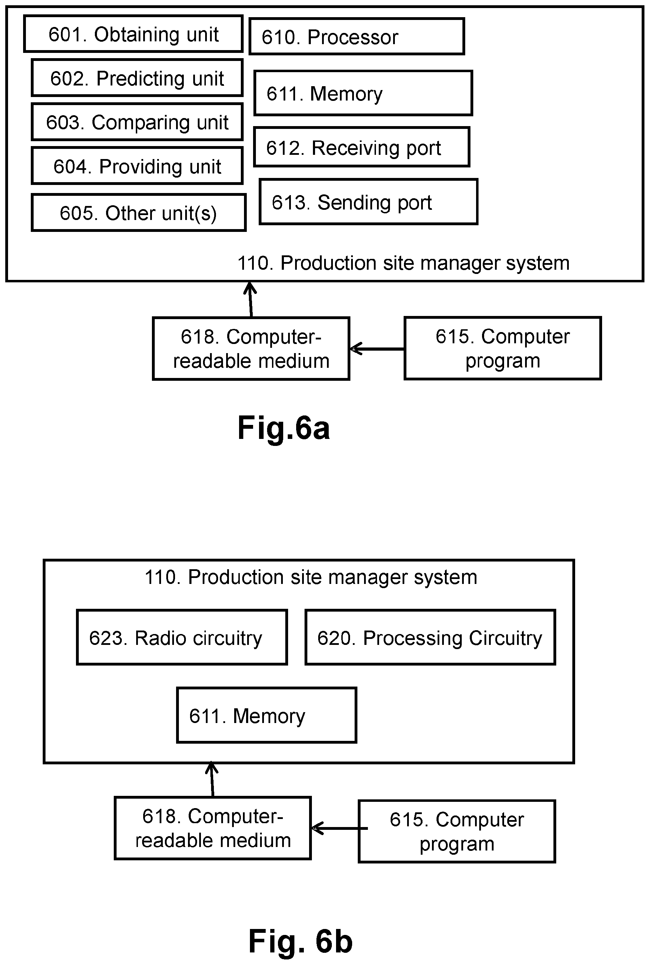

The production site manager system 110 is arranged to perform a method as described in fig. 2 To perform the method steps shown in fig. 2 for handling an objective associated with performance at a production site 100 the production site manager system 110 comprises an arrangement as shown in **fig. 6a** and/or **fig. 6b. Fig. 6a** and **fig. 6b** depict two different examples in panels a) and b), respectively, of the arrangement that the production site manager system 110 may comprise. The production site manager system 110 may comprise the following arrangement depicted in fig 6a.

The production site manager system 110 is arranged to, e.g. by means of an **obtaining unit 601,** obtain a request to handle the objective on behalf of a human production site manager 105. The obtaining unit 601 may also be referred to as an obtaining module, an obtaining means, an obtaining circuit, means for obtaining etc. The obtaining unit 601 may be a **processor 610** of the production site manager system 100 or comprised in the processor 610 of the production site manager system 100.

The production site manager system 110 is arranged to, e.g. by means of a **predicting unit 603,** when the request has been obtained, predict the objective for the performance at the production site. The objective is predicted based on historic information about the objective. The objective may be a predicted objective. The objective may be predicted based on at least one of: weather data and traffic information. Predicting the objective may be referred to as forecasting the objective and the objective may be a forecasted objective. Predicting the objective may be referred to as forecasting the objective and the objective may be a forecasted objective. Predicting the objective may be referred to as determining an expected forecast of the objective and the objective may be an expected forecasted objective. Predicting the objective may be referred to as determining an expected objective and the objective may be an expected objective. The predicting unit 603 may also be referred to as a predicting module, a predicting means, a predicting circuit, means for predicting etc. The predicting unit 603 may be the processor 610 of the production site manager system 100 or comprised in the processor 610 of the production site manager system 100.

The objective may be a goal to be achieved at the production site. The objective may be associated with a minimum amount of material transported to and/or from the production site 100 during a time period, e.g. a day, it may be associated with a minimum number of vehicles 103 performing work at the production site 100 during a time period, it may be that the amount of exhaust gas emitted by all vehicles 103 performing work at the production site 100 during a time period do not exceed a threshold, i.e. they operate in an environmental friendly fashion etc.

The production site manager system 110 is arranged to, e.g. by means of the obtaining unit 601, obtain real time information of performance at the production site. The performance at the production site may comprise vehicle performance. The performance may be associated with one or more of:
- an amount of loaded and/or unloaded goods at the production site; and/or
- a number of loads that has been loaded and/or unloaded at the production site 100; and/or
- an amount of exhaust gas emitted by the vehicles 103 at the production site 100.

The production site manager system 110 is arranged to, e.g. by means of a **comparing unit 605,** compare the real time information with the objective. The comparing unit 605 may also be referred to as a comparing module, a comparing means, a comparing circuit, means for comparing etc. The comparing unit 605 may be the processor 610 of the production site manager system 100 or comprised in the processor 610 of the production site manager system 100.

The production site manager system 110 is arranged to, e.g. by means of a **providing unit 608,** when a result of the comparing indicates a deviation, provide, at a first time instance, deviation information indicating the deviation. The first time instance may be immediately after the result of the comparing indicates the deviation. The first time instance may be during a work shift. The providing unit 608 may also be referred to as a providing module, a providing means, a providing circuit, means for providing etc. The providing unit 608 may be the processor 610 of the production site manager system 100 or comprised in the processor 610 of the production site manager system 100.

The production site manager system 110 is arranged to, e.g. by means of the providing unit 608, when the result of the comparing does not indicate the deviation, provide, at a second time instance, confirmation information indicating that a conformation of that the production site meets the objective. The second time instance may be after the first time instance. The second time instance may be at an end of the work shift.

The production site manager system 110 may be arranged to, e.g. by means of the providing unit 608, when the result of the comparing indicates the deviation, provide action information indicating one or more actions that may be taken to meet the objective. The one or more actions may comprise:
- to increase a number of vehicles associated with the production site; and
- to change the objective, i.e. to change the predicted objective.

The present disclosure related to the production site manager system 110 may be implemented through one or more processors, such as a **processor 610** in the production site manager system 110 depicted in fig. 6a, together with computer program code for performing the functions and actions described herein. A processor, as used herein, may be understood to be a hardware component. The program code mentioned above may also be provided as a computer program product, for instance in the form of a data carrier carrying computer program code for performing the present disclosure when being loaded into the production site manager system 110. One such carrier may be in the form of a CD ROM disc. It is however feasible with other data carriers such as a memory stick. The computer program code may be provided as pure program code on a server and downloaded to the production site manager system 110.

The production site manager system 110 may comprise a **memory 611** comprising one or more memory units. The memory 611 is arranged to be used to store obtained information, store data, configurations, schedulings, and applications etc. to perform the methods herein when being executed in the production site manager system 110.

The production site manager system 110 may receive information from, e.g. other systems, vehicles 103, sensors, a central sever etc., through a **receiving port 612.** The receiving port 612 may be, for example, connected to one or more antennas in production site manager system 110. The production site manager system 110 may receive information from another structure at the production site 100 through the receiving port 612. Since the receiving port 612 may be in communication with the processor 610, the receiving port 612 may then send the received information to the processor 610. The receiving port 612 may also be configured to receive other information.

The processor 610 in the UE 105 may be configured to transmit or send information to e.g. other systems, vehicles 103, sensors, a central server, or another structure in the production site 100, through a **sending port 613,** which may be in communication with the processor 610, and the memory 611.

The production site manager system 110 may comprise the obtaining unit 601, the predicting unit 602, the comparing unit 603, the providing unit 604 and other unit(s) 605.

Those skilled in the art will also appreciate that the obtaining unit 601, the predicting unit 602, the comparing unit 603, the providing unit 604 and other unit(s) 605 described above may refer to a combination of analogue and digital circuits, and/or one or more processors configured with software and/or firmware, e.g., stored in memory, that, when executed by the one or more processors such as the processor 610, perform as described above. One or more of these processors, as well as the other digital hardware, may be comprised in a single Application-Specific Integrated Circuit (ASIC), or several processors and various digital hardware may be distributed among several separate components, whether individually packaged or assembled into a System-on-a-Chip (SoC).

The different units 601-605 described above may be implemented as one or more applications running on one or more processors such as the processor 610.

Thus, the methods described herein for the production site manager system 110 may be respectively implemented by means of a **computer program 615** product, comprising instructions, i.e., software code portions, which, when executed on at least one processor 610, cause the at least one processor 610 to carry out the actions described herein, as performed by the production site manager system 110. The computer program 615 product may be stored on a **computer-readable storage medium 618.** The computer-readable storage medium 618, having stored thereon the computer program 615, may comprise instructions which, when executed on at least one processor 610, cause the at least one processor 610 to carry out the actions described herein, as performed by the production site manager system 110. The computer-readable storage medium 618 may be a non-transitory computer-readable storage medium, such as a CD ROM disc, or a memory stick. The computer program 615 product may be stored on a carrier containing the computer program 615 just described, wherein the carrier is one of an electronic signal, optical signal, radio signal, or the first computer-readable storage medium 618, as described above.

The production site manager system 110 may comprise a communication interface configured to facilitate communications between the production site manager system 110 and other nodes or devices, e.g., the vehicles 103, sensors, UEs 108, or another structure. The interface may comprise a transceiver configured to transmit and receive radio signals over an air interface in accordance with a suitable standard.

The production site manager system 110 may comprise the following arrangement depicted in fig. 6b. The production site manager system 110 may comprise a **processing circuitry 620,** e.g., one or more processors such as the processor 610, in the production site manager system 110 and the memory 611. The production site manager system 110 may also comprise a **radio circuitry 623,** which may comprise e.g., the receiving port 612 and the sending port 613. The processing circuitry 620 may be configured to, or operable to, perform the method actions according to fig. 2, in a similar manner as that described in relation to fig. 6a. The radio circuitry 623 may be configured to set up and maintain at least a wireless connection with the production site manager system 110. Circuitry may be understood herein as a hardware component.

Hence, the present disclosure also relates to the production site manager system 110 operative to operate at the production site 100. The production site manager system 110 may comprise the processing circuitry 620 and the memory 611. The memory 611 comprises instructions executable by said processing circuitry 620. The production site manager system 110 is operative to perform the actions described herein in relation to the production site manager system 110, e.g., in fig. 2.

Summarized, the present invention relates to a production site manager system 110 and a method performed by the production site manger system 100.

At start-up, e.g. at start-up of a time period such as a work shift:
- The production site manager system 110 calculates an expected forecast of the objective.
- The production site manager system 110 sets the objective in order to visualize for involved actors.
- The production site manager system 110 informs the human production site manager 105 and others subscribing on the service.

The production site manager system 110 knows on what time the production site 100 normally is maned up with loading and transporting vehicles 103 and by that know when it is fully operatable.

If the work shift is performing well the production site manager system 110 will not disturb anyone.

At end, e.g. at end of a time period such as a work shift:
- The production site manager system 110 knows when a work shift normally ends and activities end. The time of end of the work shift and time of end of the activities may be determined by the production site manager system 100 using for example advanced analytics and Al.
- The production site manager system 110 will then inform subscribers of the result of the day.

The production site manager system 110 may have kept track of the production process at the production site 100 and as nothing went wrong, no one has opened any apps or dashboards to monitor the production site 100 looking for errors.

The production site manager system 110 may provide the deviation information using push notifications or text messaging provided to mobile devices. A large percentage of people check frequently even during a work shift which makes push notifications or text messages a suitable way of providing information.

The production site manager system 110 is arranged to determine an end state of the day, for example read tons loaded out at the end of the work shift. In other words, it is arranged to determine if the objective will be met or not. The human production site manager 105 is occupied with their work at the production site but will not miss any tendency towards not meeting the objective since the production site manager system 110 directly provides deviation information when it is determined.

In general, the usage of "first", "second", "third", "fourth", and/or "fifth" herein may be understood to be an arbitrary way to denote different elements or entities and may be understood to not confer a cumulative or chronological character to the nouns they modify, unless otherwise noted, based on context.

The present disclosure is not limited to the above. Various alternatives, modifications and equivalents may be used. Therefore, disclosure herein should not be taken as limiting the scope. A feature may be combined with one or more other features.

The term "at least one of A and B" should be understood to mean "only A, only B, or both A and B.", where A and B are any parameter, number, indication used herein etc.

It should be emphasized that the term "comprises/comprising" when used in this specification is taken to specify the presence of stated features, integers, steps or components, but does not preclude the presence or addition of one or more other features, integers, steps, components or groups thereof. It should also be noted that the words "a" or "an" preceding an element do not exclude the presence of a plurality of such elements.

The term "configured to" used herein may also be referred to as "arranged to", "adapted to", "capable of" or "operative to".

The steps of the methods may be performed in another order than the order in which they appear herein.

## Claims

1. A method performed by a production site manager system (110) for handling an objective associated with performance at a production site (100), the method comprising:
*obtaining* (201) a request to handle the objective on behalf of a human production site manager (105);
when the request has been obtained, *predicting* (202) the objective for the performance at the production site, wherein the objective is predicted based on historic information about the objective;
*obtaining* (203) real time information of performance at the production site; *comparing* (204) the real time information with the objective;
when a result of the comparing indicates a deviation, *providing* (205), at a first time instance, deviation information indicating the deviation; and
when the result of the comparing does not indicate the deviation, *providing* (206), at a second time instance, confirmation information indicating that a conformation of that the production site meets the objective.

2. The method according to claim 1, comprising:
when the result of the comparing indicates the deviation, *providing* (207) action information indicating one or more actions that may be taken to meet the objective.

3. The method according to claim 2, wherein the one or more actions comprises:
• to increase a number of vehicles associated with the production site; and
• to change the objective.

4. The method according to any of the preceding claims, wherein the performance is associated with one or more of:
• an amount of loaded and/or unloaded goods at the production site; and/or
• a number of loads that has been loaded and/or unloaded at the production site.

5. The method according to any of the preceding claims, wherein the objective is predicted based on at least one of: weather data and traffic information.

6. The method according to any of the preceding claims, wherein the first time instance is immediately after the result of the comparing indicates the deviation, and
wherein the second time instance is after the first time instance.

7. The method according to any of the preceding claims, wherein the first time instance is during a work shift and the second time instance is at an end of the work shift.

8. A production site manager system (110) for handling an objective associated with performance at a production site, wherein the production site manager system (110) is arranged to perform a method according to any of claims 1-7.

9. A computer program comprising program code means for performing the steps of any of claims 1-7 when the computer program is run on a computer.

10. A computer readable medium carrying a computer program comprising program code means for performing the steps of any of claims 1-7 when the computer program is run on a computer.
